# EUROPEAN PATENT SPECIFICATION

(11) **EP 3 648 423 B1**
(45) Date of publication and mention of the grant of the patent: **11.05.2022**
(21) Application number: 18823449.6
(22) Date of filing: 16.03.2018
(51) Int. Cl.: H04L 69/00

(54) **RESOURCE ALLOCATION METHOD AND SYSTEM**
RESSOURCENZUWEISUNGSVERFAHREN UND -SYSTEM
PROCÉDÉ ET SYSTÈME D'ATTRIBUTION DE RESSOURCE

(30) Priority: 26.06.2017 CN 201710496500
(43) Date of publication of application: 06.05.2020
(73) Proprietor: ZTE Corporation, Shenzhen, Guangdong 518057 (CN)
(72) Inventor: QI, Quan, Shenzhen Guangdong 518057 (CN)
(74) Representative: Petraz, Gilberto Luigi
(86) International application number: PCT/CN2018/079312
(87) International publication number: WO 2019/001023

(56) References cited:
- WO-A1-97/04549
- CN-A- 1 545 302
- CN-A- 104 038 444
- US-A1- 2013 083 738

## Description

### Field of the Invention

The present disclosure relates to the field of communication, and particularly to a method and system for allocating resources.

### Background of the Invention

A distributed data center switch includes a management layer and a forwarding layer. A forwarding unit of the forwarding layer is a unit for forwarding service messages, and the management layer manages forwarding resources of all of the forwarding units. In some cases, when a service module in the forwarding unit applies for resources, it sends a resource application synchronous message to the management layer and establishes a service according to the resource allocated by the management layer until receiving a synchronous response message from the management layer. And after receiving the resource application synchronous message, the management layer sequentially processes each synchronous message.

As the types of services and the number of services required by users increase, there may be the following limitations: 1, as the synchronous messages sent need to wait for a sequential response from the management layer, when a plurality of the forwarding units simultaneously send a large number of resource application synchronous messages or when a large number of non-resource application synchronous messages exist, the message processing of the forwarding units and the management layer can be overtime, resulting in the failure of sending synchronous messages of the forwarding units, or the failure of the management layer to timely process the synchronous messages, ultimately resulting in the failure of normal establishment of the services; 2, when configuring a high-density service environment, each service requires a large amount of forwarding resources, and therefore a large amount of time is consumed while normally applying for allocating resources, which is unacceptable for some services. Document WO 97/04549 A1 (ASCOM NEXION INC [US]; HAUSER STEPHEN A [US] ET AL.) 6 February 1997 (1997-02-06) deals with allocation of resources governed by resource usage levels associated with resource using entities: a maximum allowed usage level and a minimum guaranteed usage level.

### Summary of the Invention

Embodiments of the present disclosure provide a method for allocating resources, which includes the following steps: a synchronous allocation module of a forwarding unit receiving a resource application request for a service of the forwarding unit, wherein the resource application request carries index information of the service of the forwarding unit, the forwarding unit is located in a forwarding layer of a switch, and the synchronous allocation module stores first resource allocation information periodically synchronized by a management and allocation module of a management layer of the switch, and the first resource allocation information includes information about allocated resources and unallocated resources; the synchronous allocation module searching for, from the first resource allocation information stored therein, a first resource that is not used and matches the index information, according to the index information and resource allocation information of the forwarding unit; and the synchronous allocation module autonomously allocating the first resource to the service for use.

The embodiments of the present disclosure provide a system for allocating resources, which includes a forwarding unit and a management layer of a switch, and the forwarding unit includes a synchronous allocation module, the management layer of the switch includes a management and allocation module, the synchronous allocation module is configured to receive a resource application request for a service of the forwarding unit, wherein the resource application request carries index information of the service of the forwarding unit, and the forwarding unit is located in the forwarding layer of the switch, and the management and allocation module is configured to periodically synchronize first resource allocation information to the synchronous allocation module, and the first resource allocation information includes information about allocated resources and unallocated resources; the synchronous allocation module stores the first resource allocation information which is periodically synchronized by the management and allocation module, and the synchronous allocation module searches for, from the first resource allocation information stored therein, a first resource that is not used and matches the index information, according to the index information and resource allocation information of the forwarding unit, and automatically allocates the first resource to the service for use.

The embodiments of the present disclosure further provide a computer storage medium having stored therein computer-executable instructions for performing the afore-mentioned method for allocating resources.

### Brief Description of the Drawings

FIG. 1 is a schematic diagram of a resource allocation of a distributed data center switch;
FIG. 2 is a schematic diagram of a system for allocating resources according to an embodiment of the present disclosure;
FIG. 3 is a flowchart of a method for allocating resources according to an embodiment of the present disclosure;
FIG. 4 is a flowchart of a method for allocating resources according to another embodiment of the present disclosure;
FIG. 5 is a flowchart of a method for allocating resources performed on a forwarding unit according to an embodiment of the present disclosure; and
FIG. 6 is a flowchart of a method for allocating resources performed on a management layer according to an embodiment of the present disclosure.

### Detailed Description of the Embodiments

The embodiments of the present disclosure are described in further detail below with reference to the accompanying drawings.

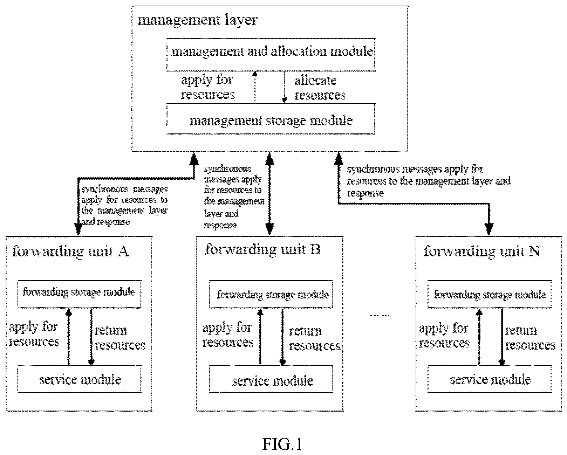

FIG. 1 is a schematic diagram of a resource allocation of a distributed data center switch. The distributed data center switch in FIG. 1 includes a management layer (also referred to herein as a "management layer of the switch ") and a forwarding layer. A forwarding unit of the forwarding layer is a unit for forwarding service messages, and the management layer manages forwarding resources of all the forwarding units. When a service module (also referred to herein as a "service") in the forwarding unit applies for a resource, the forwarding unit sends a resource application synchronous message to the management layer and may establish a service according to a resource allocated by the management layer after receiving a synchronous response message from the management layer. And after receiving the resource application synchronous message, the management layer sequentially processes each synchronous message.

The distributed data center switch shown in FIG. 1 may have the following limitations: 1, as the synchronous messages sent need to wait for a sequential response from the management layer, when a plurality of the forwarding units simultaneously send a large number of resource application synchronous messages or when a large number of non-resource application synchronous messages exist, the message processing of the forwarding units and the management layer may be overtime, resulting in the failure of sending synchronous messages of the forwarding units, or the failure of the management layer to timely process the synchronous messages, ultimately resulting in the failure of normal establishment of the services; 2, when configuring a high-density service environment, each service requires a large amount of forwarding resources, and therefore a large amount of time is consumed while normally applying for allocating resources, which is unacceptable for some services.

In this regard, the embodiments of the present disclosure provide a system for allocating resources and method.

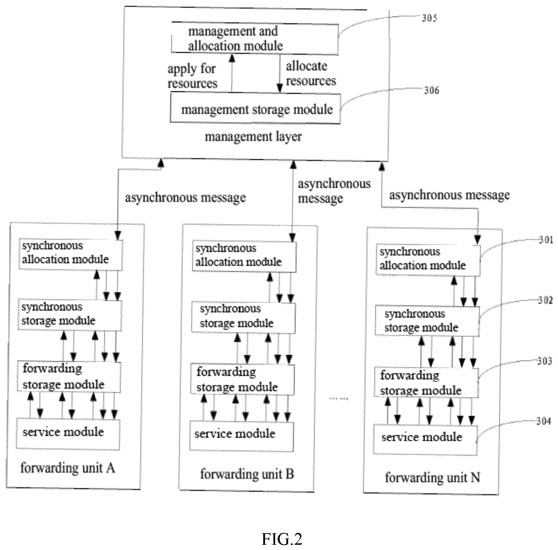

FIG. 2 is a schematic diagram of a system for allocating resources according to an embodiment of the present disclosure.

Referring to FIG. 2, the system for allocating resources according to the embodiment of the present disclosure includes a forwarding layer and a management layer. The management layer includes a management and allocation module 305 and a management storage module 306, and the forwarding layer includes a plurality of forwarding units sequentially numbered as a forwarding unit A, a forwarding unit B ... forwarding unit N (N represents a total of N forwarding units). Each forwarding unit includes a synchronous allocation module 301, a synchronous storage module 302, a forwarding storage module 303 and a service module 304, respectively.

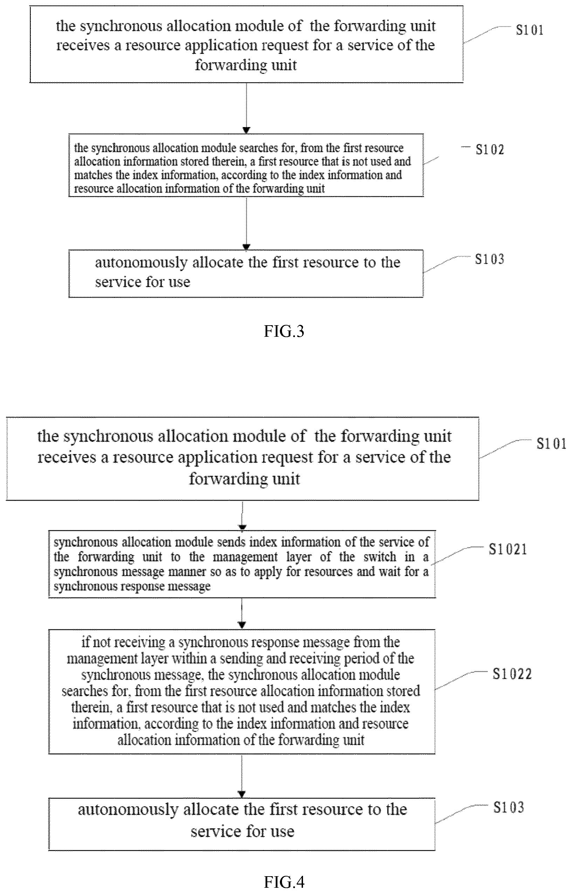

FIG. 3 is a flowchart of a method for allocating resources according to an embodiment of the present disclosure. Referring to FIGs. 2 and 3, the method for allocating resources includes the following steps of S101-S103.

In a step of S101, the synchronous allocation module 301 of the forwarding unit receives a resource application request for a service of the forwarding unit. The resource application request carries index information of the service of the forwarding unit. The forwarding unit is located in the forwarding layer of the switch, and the synchronous allocation module 301 stores first resource allocation information periodically synchronized by the management and allocation module 305 on the management layer of the switch. The first resource allocation information includes information about allocated resources and unallocated resources.

In a step of S102, the synchronous allocation module 301 searches for, from the first resource allocation information stored therein, a first resource that is not used and matches the index information, according to the index information and resource allocation information of the forwarding unit.

In the embodiment of the present disclosure, the synchronous allocation module 301 needs to consider the resource allocation information of the present forwarding unit when allocating resources.

In the embodiment of the present disclosure, the first resource is a resource that may meet the requirements of the service.

In a step of S103, the synchronous allocation module 301 autonomously allocates the first resource to the service of the forwarding unit for use.

In the embodiment of the present disclosure, the synchronous allocation module 301 temporarily autonomously allocates the first resource to the service of the forwarding unit for use.

According to the embodiment of the present disclosure, after the first resource is autonomously allocated to the service for use in the step of S103, the method for allocating resources further includes: the synchronous allocation module 301 sending the index information of the service of the forwarding unit and the first resource to the management and allocation module 305 in an asynchronous message manner. In this case, it need not wait for a response of the management and allocation module 305, but may continue to perform operation.

According to the embodiment of the present disclosure, after the synchronous allocation module 301 sends the index information of the service and the first resource to the management and allocation module 305 in an asynchronous message manner, the method for allocating resources further includes: the management and allocation module 305 receiving the asynchronous message; when the management layer is idle, the management and allocation module 305 searching for, from the first resource allocation information stored therein, a second resource that is not used and matches the index information, according to the index information of the service and resource allocation information of each forwarding unit, and sending the second resource and the index information of the service to the synchronous allocation module 301 in an asynchronous response message manner; and the synchronous allocation module 301 receiving and analyzing the asynchronous response message, releasing the first resource according to an analysis result, and allocating the second resource to the service for use.

In the embodiment of the present disclosure, the management and allocation module 305 needs to consider the resource allocation information of all the forwarding units when allocating resources.

According to the embodiment of the present disclosure, after the first resource is autonomously allocated to the service for use in the step of S103, the method for allocating resources further includes: the synchronous allocation module 301 sending the first resource and the index information of the service to a synchronous storage module 302 of the forwarding unit; and the synchronous storage module 302 recording and storing the first resource and the index information of the service.

In the embodiment of the present disclosure, the synchronous storage module 302 may store therein second resource allocation information periodically synchronized by the management storage module 306 on the management layer of the switch, the second resource allocation information including index information of the existing service of each forwarding unit and resources correspondingly allocated thereto.

According to the embodiment of the present disclosure, before the synchronous allocation module 301 of the forwarding unit receives a resource application request in the step of S101, the method for allocating resources further includes: the synchronous storage module 302 receiving a resource application request; the synchronous storage module 302 judging whether a first resource exists in the second resource allocation information stored therein according to the index information; if the first resource exists, returning the first resource to the service for use, and sending the index information of the service of the forwarding unit and the first resource correspondingly allocated to the management storage module 306 of the management layer in an asynchronous message manner for recording and storing; and if not, sending the resource application request to the synchronous allocation module 301 of the forwarding unit.

FIG. 4 is a flowchart of a method for allocating resources according to another embodiment of the present disclosure. The difference from the embodiment shown in FIG. 3 is that in the method for allocating resources of the present embodiment, steps S1021 and S1022 are included instead of the above-mentioned step S102.

In a step of S1021, the synchronous allocation module 301 sends index information of the service of the forwarding unit to the management layer of the switch in a synchronous message manner so as to apply for resources to the management layer of the switch and wait for a synchronous response message.

In a step of S1022, if the synchronous allocation module 301 does not receive a synchronous response message from the management layer within a sending and receiving period of the synchronous message, the synchronous allocation module 301 searches for, from the first resource allocation information stored therein, a first resource that is not used and matches the index information, according to the index information and resource allocation information of the forwarding unit.

In the present embodiment, the synchronous allocation module 301 first applies for resources to the management layer in a synchronous message manner and waits for a synchronous response message before searching for the first resource from the first resource allocation information stored therein. In a case where the synchronous response message is not received from the management layer, the synchronous allocation module 301 then searches for the first resource.

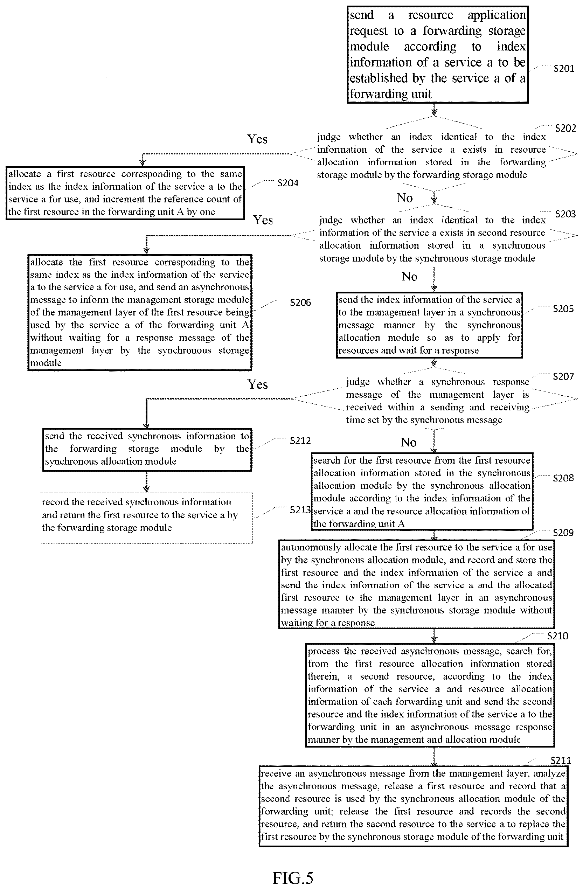

FIG. 5 is a flowchart of a method for allocating resources performed on a forwarding unit according to an embodiment of the present disclosure.

Referring to FIGs. 2 and 5, the method for allocating resources according to the present embodiment includes the following steps of S201-S213 when performed on the forwarding unit.

In a step of S201, a service a (e.g., a service module 304 of a forwarding unit A shown in FIG. 2) of a forwarding unit (e.g., the forwarding unit A shown in FIG. 2) sends a resource application request to a forwarding storage module (e.g., a forwarding storage module 303 of the forwarding unit A shown in FIG. 2) according to index information of the service a to be established.

In a step of S202, the forwarding storage module judges whether an index identical to the index information of the service a exists in the resource allocation information stored therein according to the index information of the service a. If not, a step of S203 is proceeded, and if so, a step of S204 is proceeded.

According to the embodiment of the present disclosure, the forwarding storage module may compare the index information of the service a with service indexes stored therein one by one.

The forwarding storage module is configured to store forwarding resources allocated by the management layer and allocated autonomously by a synchronous allocation module (e.g. a synchronous allocation module 301 of the forwarding unit A shown in FIG. 2), i.e. resources already used for each forwarding service.

In a step of S203, a synchronous storage module (e.g., a synchronous storage module 302 of the forwarding unit A shown in FIG. 2) judges whether an index identical to the index information of the service a exists in the second resource allocation information stored therein according to the index information of the service a. If not, a step of S205 is proceeded, and if so, a step of S206 is proceeded.

If available resources are not found in the forwarding storage module, the resource application request is submitted to the synchronous storage module for processing. The synchronous storage module stores therein second resource allocation information periodically synchronized by a management storage module (e.g., a management storage module 306 shown in FIG. 2) of the management layer of the switch, the second resource allocation information including index information of an existing service of each forwarding unit and resources correspondingly allocated thereto.

The management storage module of the management layer may actively and periodically synchronize the second resource allocation information to the synchronous storage module of each forwarding unit.

In a step of S204, the first resource corresponding to the same index as the index information of the service a is allocated to the service a for use, and the reference count of the first resource in the present forwarding unit A is incremented by one.

In a step of S205, the synchronous allocation module sends the index information of the service a to the management layer in a synchronous message manner so as to apply for resources and wait for a response, and then a step of S207 is proceeded.

In a step of S206, the synchronous storage module allocates the first resource corresponding to the same index as the index information of the service a to the service a for use, and sends an asynchronous message to inform the management storage module of the management layer of: the first resource being used by the service a of the forwarding unit A without waiting for a response message of the management layer.

In the embodiment of the present disclosure, the management layer processes asynchronous messages sent by the synchronous storage module when idle, and the management storage module records: the first resource being used by the service a of the forwarding unit A without responding to the asynchronous messages.

In a step of S207, the synchronous allocation module judges whether a synchronous response message of the management layer is received within a sending and receiving period set by the synchronous message. If not, a step of S208 is proceeded, and if so, a step of S212 is proceeded.

If the synchronous response message is received within the set time, it is indicating that the current system is not busy, and then a step of S212 is proceeded for resource allocation; if the response message cannot be received within the set time, it is indicating that the current system is busy, and an asynchronous message is required to be sent to apply for resources, thereby proceeding to a step of S208.

In a step of S208, the synchronous allocation module searches for the first resource from the first resource allocation information stored therein according to the index information of the service a and the resource allocation information of the forwarding unit A.

In the embodiment of the present disclosure, the first resource is a resource that is not used and matches the index information.

In the embodiment of the present disclosure, the synchronous allocation module stores therein first resource allocation information that is periodically synchronized by a management and allocation module (e.g., the management and allocation module 305 shown in FIG. 2) of the management layer of the switch, the first resource allocation information including information about allocated resources and unallocated resources.

In the embodiment of the present disclosure, the management and allocation module may store the allocated resources and the unallocated resources in the form of bit.

The management and allocation module of the management layer may actively and periodically synchronize the first resource allocation information to the synchronous allocation module of each forwarding unit.

In a step of S209, the synchronous allocation module autonomously allocates the first resource to the service a for use, and sends the index information of the service a and the allocated first resource to the management layer in an asynchronous message manner. And the synchronous storage module records and stores the first resource and the index information of the service. In this case, the operation may continue without waiting for a response.

In a step of S210, when the management layer is idle, the management and allocation module processes the received asynchronous message; the management and allocation module searches for, from the first resource allocation information stored therein, a second resource, according to the index information of the service a and the resource allocation information of each forwarding unit; the second resource and the index information of the service a are sent to the forwarding unit in an asynchronous message response manner.

In the embodiment of the present disclosure, the management storage module further records: the service a of the forwarding unit A applies for the use of the second resource.

In the embodiment of the present disclosure, the second resource is a resource that is not used and matches the index information.

In the embodiment of the present disclosure, the first resource allocation information includes information about allocated resources and unallocated resources.

In a step of S211, the synchronous allocation module of the forwarding unit receives an asynchronous message from the management layer, analyzes the asynchronous message, releases a first resource according to an analysis result and records that a second resource is used; the synchronous storage module of the forwarding unit releases the first resource and records the second resource, and returns the second resource to the service a to replace the first resource.

In a step of S212, the synchronous allocation module sends the received synchronous information to the forwarding storage module.

In a step of S213, the forwarding storage module records the received synchronous information and returns the first resource to the service a.

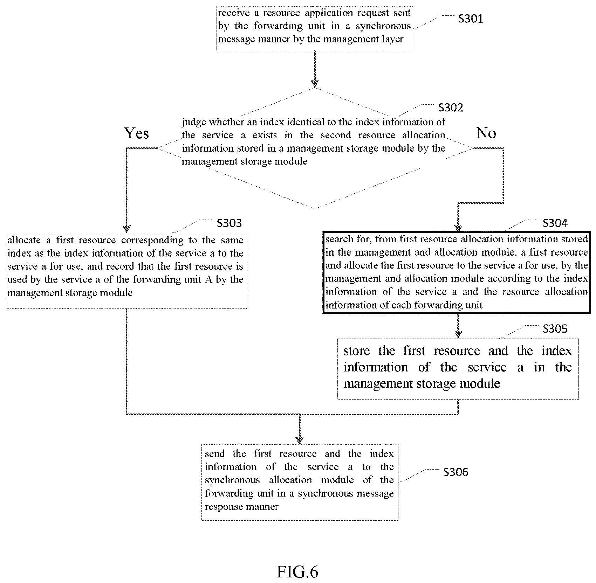

FIG. 6 is a flowchart of a method for allocating resources performed on a management layer according to an embodiment of the present disclosure.

Referring to FIGs. 2, 5 and 6, the method for allocating resources according to the present embodiment includes the following steps of S301-S306 when performed on the management layer.

In a step of 301, the management layer receives the resource application request sent by the forwarding unit in a synchronous message manner (a step of S205 in FIG. 5), and receives and processes the synchronous message.

In a step of 302, a management storage module (e.g., the management storage module 306 shown in FIG. 2) judges whether an index identical to the index information of the service a exists in the second resource allocation information stored therein according to the index information of the service a of the forwarding unit A; if not, a step of S304 is proceeded, and if so, a step of S303 is proceeded.

In a step of 303, the management storage module allocates the first resource corresponding to the same index as the index information of the service a to the service a for use, and records that the first resource is used by the service a of the forwarding unit A. A step of S306 is then proceeded.

In a step of 304, the management and allocation module (e.g., the management and allocation module 305 shown in FIG. 2) searches for, from first resource allocation information stored therein, a first resource and allocates the first resource to the service a for use, according to the index information of a service a and resource allocation information of each forwarding unit.

In a step of 305, the management storage module stores therein the first resource and the index information of the service a.

In a step of 306, the first resource and the index information of service a are sent to the synchronous allocation module of the forwarding unit in a synchronous message response manner.

Further, it may be judged in a step of S207 in FIG. 5 that a synchronous response message is received from the management layer within a sending and receiving period set by the synchronous message.

According to the embodiment of the present disclosure, the management layer synchronizes the use conditions of chip forwarding resources of all the current forwarding units to each forwarding unit, and when the processing amount of the resource application request of the management layer is too large to process synchronous messages of the chip forwarding resources in time, each forwarding unit may voluntarily allocate resources for use and send asynchronous messages to apply for forwarding resources to the management layer. The management layer processes the asynchronous messages when idle, allocates the forwarding resources, and sends asynchronous response messages to corresponding forwarding units to update resource table entries of the forwarding units. The method not only solves the defect that resources cannot be normally allocated due to the fact that the management layer cannot timely process synchronous messages in some situations, but also can greatly improve the allocation speed of forwarding resources in a high-density forwarding service and improve the efficiency of service establishment, deletion and updating.

It will be apparent to those skilled in the art that the modules or steps of the embodiments of the present disclosure described above may be implemented using a general-purpose computing system, which may be centralized on a single computing system or distributed across a network of multiple computing systems. Alternatively, it may be implemented in program code executable by a computing system, such that it may be stored in a storage medium (ROM/RAM, diskette, optical disk) for execution by the computing system. Additionally, in some instances, the steps shown or described may be performed in an order other than that herein, or separately fabricated as individual integrated circuit modules, or multiple modules or steps thereof are fabricated as a single integrated circuit module for implementation. Therefore, the present disclosure is not limited to any particular combination of hardware and software.

The foregoing is a further detailed description of the embodiments of the present disclosure with reference to specific embodiments, and is not to be taken as limiting the specific embodiments of the present disclosure. The present disclosure is limited only by the scope of the appended claims.

## Claims

1. A method for allocating resources, comprising:
receiving, by a synchronous allocation module of a forwarding unit, a resource application request for a service of the forwarding unit (s101), wherein the resource application request carries index information of the service of the forwarding unit, the forwarding unit is located in a forwarding layer of a switch, the synchronous allocation module stores first resource allocation information periodically synchronized by a management and allocation module on a management layer of the switch, and the first resource allocation information includes information about allocated resources and unallocated resources;
searching (s102) for, by the synchronous allocation module, from the first resource allocation information stored therein, a first resource that is not used and matches the index information, according to the index information and resource allocation information of the forwarding unit; and
allocating (s103), by the synchronous allocation module, the first resource autonomously to the service for use.

2. The method for allocating resources of claim 1, wherein after the step of allocating, by the synchronous allocation module, the first resource autonomously to the service for use, the method further comprises:
sending, by the synchronous allocation module, the index information of the service and the first resource to the management and allocation module in an asynchronous message manner.

3. The method for allocating resources of claim 2, wherein after the step of sending, by the synchronous allocation module, the index information of the service and the first resource to the management and allocation module in an asynchronous message manner, the method further comprises:
receiving, by the management and allocation module, the asynchronous message;
when the management layer is idle, searching for, by the management and allocation module, from the first resource allocation information stored therein, a second resource that is not used and matches the index information, according to the index information of the service and resource allocation information of each forwarding unit, and sending the second resource and the index information of the service to the synchronous allocation module in an asynchronous response message manner; and
receiving and analyzing, by the synchronous allocation module, the asynchronous response message, and releasing the first resource according to an analysis result, and allocating the second resource to the service for use.

4. The method for allocating resources of claim 1, wherein after the step of allocating, by the synchronous allocation module, the first resource autonomously to the service for use, the method further comprises:
sending, by the synchronous allocation module, the first resource and the index information of the service to a synchronous storage module of the forwarding unit; and
recording and storing, by the synchronous storage module, the first resource and the index information of the service.

5. The method for allocating resources of claim 1, wherein a synchronous storage module of the forwarding unit stores second resource allocation information periodically synchronized by a management storage module of the management layer of the switch, wherein the second resource allocation information includes index information of an existing service of each forwarding unit and correspondingly allocated resources, and wherein
before the step of receiving, by the synchronous allocation module of the forwarding unit, a resource application request, the method further comprises:
receiving, by the synchronous storage module, the resource application request;
judging, by the synchronous storage module, whether the first resource exists in the second resource allocation information stored therein, according to the index information;
if the first resource exists, returning the first resource to the service for use, and sending the index information of the service of the forwarding unit and the first resource correspondingly allocated to a management storage module of the management layer in an asynchronous message manner for recording and storing; and
if the first resource does not exist, sending the resource application request to the synchronous allocation module of the forwarding unit.

6. The method for allocating resources of claim 1, wherein after the step of receiving, by the synchronous allocation module, a resource application request for a service of the forwarding unit, the method further comprises:
sending, by the synchronous allocation module, index information of the service of the forwarding unit to the management layer of the switch in a synchronous message manner, so as to apply for resources to the management layer of the switch and wait for a synchronous response message, and
when the synchronous allocation module does not receive the synchronous response message of the management layer within a sending and receiving period of the synchronous message, performing, by the synchronous allocation module, a step of searching for the first resource from the first resource allocation information stored therein.

7. A system for allocating resources, comprising a forwarding unit and a management layer of a switch, wherein the forwarding unit comprises a synchronous allocation module and the management layer of the switch comprises a management and allocation module, wherein
the synchronous allocation module, configured to receive a resource application request for a service of the forwarding unit, wherein the resource application request carries index information of the service of the forwarding unit, and the forwarding unit is located in a forwarding layer of the switch;
the management and allocation module, configured to periodically synchronize first resource allocation information to the synchronous allocation module, the first resource allocation information comprises information about allocated resources and unallocated resources;
the synchronous allocation module, configured to store the first resource allocation information periodically synchronized by the management and allocation module, and
the synchronous allocation module, configured to search for, from the first resource allocation information stored therein, a first resource that is not used and matches the index information, according to the index information and resource allocation information of the forwarding unit, and automatically allocate the first resource to the service for use.

8. The system for allocating resources of claim 7, wherein the synchronous allocation module is further configured to send the index information of the service and the message of the first resource to the management layer in an asynchronous message manner after autonomously allocating the first resource to the service for use.

9. The system for allocating resources of claim 8, wherein the management and allocation module is further configured to:
receive, after the synchronous allocation module sends the index information of the service and the first resource to the management layer in an asynchronous message manner, the asynchronous message;
when the management layer is idle, search for, from the first resource allocation information stored therein, a second resource that is not used and matches the index information, according to the index information of the service and resource allocation information of each forwarding unit, and send the second resource and the index information of the service to the synchronous allocation module in an asynchronous response message manner; and
the synchronous allocation module is further configured to receive and analyze the asynchronous response message, and release the first resource according to an analysis result, and allocate the second resource to the service for use.

10. The system for allocating resources of claim 7, wherein the forwarding unit further comprises a synchronous storage module, where
the synchronous allocation module is further configured to send the first resource and the index information of the service to the synchronous storage module after autonomously allocating the first resource to the service for use, and
the synchronous storage module is configured to record and store the first resource and the index information of the service.

11. The system for allocating resources of claim 7, wherein the forwarding unit further comprises a synchronous storage module, and the management layer of the switch further comprises a management storage module, wherein
the management storage module is configured to periodically synchronize second resource allocation information to the synchronous storage module, the second resource allocation information includes index information of an existing service of each forwarding unit and correspondingly allocated resources;
the synchronous storage module is configured to:
store the second resource allocation information periodically synchronized by the management storage module;
receives a resource application request before a synchronous allocation module of the forwarding unit receives the resource application request;
judge whether the first resource exists in the second resource allocation information stored therein, according to the index information;
if the first resource exists, return the first resource to the service for use, and send the index information of the service of the forwarding unit and the first resource correspondingly allocated to a management storage module of the management layer in an asynchronous message manner for recording and storing; and
if the first resource does not exist, send the resource application request to the synchronous allocation module of the forwarding unit.

12. The system for allocating resources of claim 7, wherein the synchronous allocation module is further configured to:
send the index information of the service of the forwarding unit to the management layer of the switch in a synchronous message manner, so as to apply for resources to the management layer of the switch and wait for a synchronous response message; and
when the synchronous response message of the management layer is not received within a sending and receiving period of the synchronous message, the synchronous allocation module configured to search for the first resource from the first resource allocation information stored therein, and autonomously allocate the first resource to the service for use.

## Patentansprüche

1. Verfahren zur Zuweisung von Ressourcen, umfassend:
Empfangen, durch ein synchrones Zuweisungsmodul einer Weiterleitungseinheit, einer Ressourcenanwendungsanforderung nach einem Dienst der Weiterleitungseinheit (s101), worin die Ressourcenanwendungsanforderung Indexinformationen des Dienstes der Weiterleitungseinheit trägt, die Weiterleitungseinheit in einer Weiterleitungsschicht eines Schalters gelegen ist, das synchrone Zuweisungsmodul erste Ressourcenzuweisungsinformationen speichert, die von einem Verwaltungs- und Zuweisungsmodul auf einer Verwaltungsschicht des Schalters periodisch synchronisiert werden, und die ersten Ressourcenzuweisungsinformationen Informationen über zugewiesene Ressourcen und nicht-zugewiesene Ressourcen umfassen;
Suchen (s102), durch das synchrone Zuweisungsmodul, aus den ersten, darin gespeicherten Ressourcenzuweisungsinformationen, nach einer ersten Ressource, die nicht benutzt ist und zu den Indexinformationen passt, gemäß den Indexinformationen und Ressourcenzuweisungsinformationen der Weiterleitungseinheit; und
Zuweisen (s103), durch das synchrone Zuweisungsmodul, der ersten Ressource eigenständig dem Dienst für die Benutzung.

2. Verfahren zur Zuweisung von Ressourcen nach Anspruch 1, worin nach dem Schritt des Zuweisens, durch das synchrone Zuweisungsmodul, der ersten Ressource eigenständig dem Dienst für die Benutzung, das Verfahren ferner umfasst:
Senden, durch das synchrone Zuweisungsmodul, der Indexinformationen des Dienstes und der ersten Ressource an das Verwaltungs- und Zuweisungsmodul in einer asynchronen Nachrichtenweise.

3. Verfahren zur Zuweisung von Ressourcen nach Anspruch 2, worin nach dem Schritt des Sendens, durch das synchrone Zuweisungsmodul, der Indexinformationen des Dienstes und der ersten Ressource an das Verwaltungs- und Zuweisungsmodul in einer asynchronen Nachrichtenweise, das Verfahren ferner umfasst:
Empfangen, durch das Verwaltungs- und Zuweisungsmodul, der asynchronen Nachricht;
wenn die Verwaltungsschicht inaktiv ist, Suchen, durch das Verwaltungs- und Zuweisungsmodul, aus den ersten, darin gespeicherten Ressourcenzuweisungsinformationen, nach einer zweiten Ressource, die nicht benutzt ist und zu den Indexinformationen passt, gemäß den Indexinformationen des Dienstes und Ressourcenzuweisungsinformationen jeder Weiterleitungseinheit, und Senden der zweiten Ressource und der Indexinformationen des Dienstes an das synchrone Zuweisungsmodul in einer asynchronen Antwortnachrichtenweise; und
Empfangen und Analysieren, durch das synchrone Zuweisungsmodul, der asynchronen Antwortnachricht, und Freigeben der ersten Ressource gemäß einem Analyseergebnis, und Zuweisen der zweiten Ressource dem Dienst für die Benutzung.

4. Verfahren zur Zuweisung von Ressourcen nach Anspruch 1, worin nach dem Schritt des Zuweisens, durch das synchrone Zuweisungsmodul, der ersten Ressource eigenständig dem Dienst für die Benutzung, das Verfahren ferner umfasst:
Senden, durch das synchrone Zuweisungsmodul, der ersten Ressource und der Indexinformationen des Dienstes an ein synchrones Speicherungsmodul der Weiterleitungseinheit; und
Aufzeichnen und Speichern, durch das synchrone Speicherungsmodul, der ersten Ressource und der Indexinformationen des Dienstes.

5. Verfahren zur Zuweisung von Ressourcen nach Anspruch 1, worin ein synchrones Speicherungsmodul der Weiterleitungseinheit zweite Ressourcenzuweisungsinformationen speichert, die von einem Verwaltungsspeicherungsmodul der Verwaltungsschicht des Schalters periodisch synchronisiert werden, worin die zweiten Ressourcenzuweisungsinformationen Indexinformationen eines existierenden Dienstes jeder Weiterleitungseinheit und dementsprechend zugewiesene Ressourcen umfassen, und worin
vor dem Schritt des Empfangens, durch das synchrone Zuweisungsmodul der Weiterleitungseinheit, einer Ressourcenanwendungsanforderung, das Verfahren ferner umfasst:
Empfangen, durch das synchrone Speicherungsmodul, der Ressourcenanwendungsanforderung;
Beurteilen, durch das synchrone Speicherungsmodul, ob die erste Ressource in den zweiten, darin gespeicherten Ressourcenzuweisungsinformationen existiert, gemäß den Indexinformationen;
wenn die erste Ressource existiert, Zurücksenden der ersten Ressource an den Dienst für die Benutzung, und Senden der Indexinformationen des Dienstes der Weiterleitungseinheit und der dementsprechend zugewiesenen ersten Ressource an ein Verwaltungsspeicherungsmodul der Verwaltungsschicht in einer asynchronen Nachrichtenweise zum Aufzeichnen und Speichern; und
wenn die erste Ressource nicht existiert, Senden der Ressourcenanwendungsanforderung an das synchrone Speicherungsmodul der Weiterleitungseinheit.

6. Verfahren zur Zuweisung von Ressourcen nach Anspruch 1, worin nach dem Schritt des Empfangens, durch das synchrone Zuweisungsmodul, einer Ressourcenanwendungsanforderung nach einem Dienst der Weiterleitungseinheit, das Verfahren ferner umfasst:
Senden, durch das synchrone Zuweisungsmodul, von Indexinformationen des Dienstes der Weiterleitungseinheit an die Verwaltungsschicht des Schalters in einer synchronen Nachrichtenweise, um bei der Verwaltungsschicht des Schalters Ressourcen zu beantragen und auf eine synchrone Antwortnachricht zu warten, und
wenn das synchrone Zuweisungsmodul die synchrone Antwortnachricht der Verwaltungsschicht innerhalb einer Sende- und Empfangsperiode der synchronen Nachricht nicht empfängt, Durchführen, durch das synchrone Zuweisungsmodul, eines Schrittes des Suchens nach der ersten Ressource aus den ersten, darin gespeicherten Ressourcenzuweisungsinformationen.

7. System zur Zuweisung von Ressourcen, umfassend eine Weiterleitungseinheit und eine Verwaltungsschicht eines Schalters, worin die Weiterleitungseinheit ein synchrones Zuweisungsmodul umfasst und die Verwaltungsschicht des Schalters ein Verwaltungs- und Zuweisungsmodul umfasst, worin
das synchrone Zuweisungsmodul dazu eingerichtet ist, eine Ressourcenanwendungsanforderung nach einem Dienst der Weiterleitungseinheit zu empfangen, worin die Ressourcenanwendungsanforderung Indexinformationen des Dienstes der Weiterleitungseinheit trägt, und die Weiterleitungseinheit in einer Weiterleitungsschicht des Schalters gelegen ist;
das Verwaltungs- und Zuweisungsmodul dazu eingerichtet ist, dem synchronen Zuweisungsmodul erste Ressourcenzuweisungsinformationen periodisch zu synchronisieren, die ersten Ressourcenzuweisungsinformationen Informationen über zugewiesene Ressourcen und nicht-zugewiesene Ressourcen umfassen;
das synchrone Zuweisungsmodul dazu eingerichtet ist, die ersten Ressourcenzuweisungsinformationen zu speichern, die von dem Verwaltungs- und Zuweisungsmodul periodisch synchronisiert werden, und
das synchrone Zuweisungsmodul dazu eingerichtet ist, aus den ersten, darin gespeicherten Ressourcenzuweisungsinformationen, nach einer ersten Ressource, die nicht benutzt ist und zu den Indexinformationen passt, gemäß den Indexinformationen und Ressourcenzuweisungsinformationen der Weiterleitungseinheit zu suchen, und die erste Ressource dem Dienst für die Benutzung eigenständig zuzuweisen.

8. System zur Zuweisung von Ressourcen nach Anspruch 7, worin das synchrone Zuweisungsmodul ferner dazu eingerichtet ist, die Indexinformationen des Dienstes und die Nachricht der ersten Ressource an die Verwaltungsschicht in einer asynchronen Nachrichtenweise nach dem eigenständigen Zuweisen der ersten Ressource dem Dienst für die Benutzung zu senden.

9. System zur Zuweisung von Ressourcen nach Anspruch 8, worin das Verwaltungs- und Zuweisungsmodul ferner dazu eingerichtet ist:
nachdem das synchrone Zuweisungsmodul die Indexinformationen des Dienstes und die erste Ressource an die Verwaltungsschicht in einer asynchronen Nachrichtenweise sendet, die asynchrone Nachricht zu empfangen;
wenn die Verwaltungsschicht inaktiv ist, aus den ersten, darin gespeicherten Ressourcenzuweisungsinformationen, nach einer zweiten Ressource, die nicht benutzt ist und zu den Indexinformationen passt, gemäß den Indexinformationen des Dienstes und Ressourcenzuweisungsinformationenjeder Weiterleitungseinheit zu suchen, und die zweite Ressource und die Indexinformationen des Dienstes an das synchrone Zuweisungsmodul in einer asynchronen Antwortnachrichtenweise zu senden; und
das synchrone Zuweisungsmodul ferner dazu eingerichtet ist, die asynchrone Antwortnachricht zu empfangen und zu analysieren, und die erste Ressource gemäß einem Analyseergebnis freizugeben, und die zweite Ressource dem Dienst für die Benutzung zuzuweisen.

10. System zur Zuweisung von Ressourcen nach Anspruch 7, worin die Weiterleitungseinheit ferner ein synchrones Speicherungsmodul umfasst, wo
das synchrone Zuweisungsmodul ferner dazu eingerichtet ist, die erste Ressource und die Indexinformationen des Dienstes an das synchrone Speicherungsmodul nach dem eigenständigen Zuweisen der ersten Ressource dem Dienst für die Benutzung zu senden, und
das synchrone Speicherungsmodul dazu eingerichtet ist, die erste Ressource und die Indexinformationen des Dienstes aufzuzeichnen und zu speichern.

11. System zur Zuweisung von Ressourcen nach Anspruch 7, worin die Weiterleitungseinheit ferner ein synchrones Speicherungsmodul umfasst, und die Verwaltungsschicht des Schalters ferner ein Verwaltungsspeicherungsmodul umfasst, worin
das Verwaltungsspeicherungsmodul dazu eingerichtet ist, zweite Ressourcenzuweisungsinformationen dem synchronen Speicherungsmodul periodisch zu synchronisieren, die zweiten Ressourcenzuweisungsinformationen Indexinformationen eines existierenden Dienstes jeder Weiterleitungseinheit und dementsprechend zugewiesene Ressourcen umfassen;
das synchrone Speicherungsmodul dazu eingerichtet ist:
die zweiten Ressourcenzuweisungsinformationen zu speichern, die von dem Verwaltungsspeicherungsmodul periodisch synchronisiert werden;
eine Ressourcenanwendungsanforderung zu empfangen, bevor ein synchrones Zuweisungsmodul der Weiterleitungseinheit die Ressourcenanwendungsanforderung empfängt;
zu beurteilen, ob die erste Ressource in den zweiten, darin gespeicherten Ressourcenzuweisungsinformationen existiert, gemäß den Indexinformationen;
wenn die erste Ressource existiert, die erste Ressource an den Dienst für die Benutzung zurückzusenden, und die Indexinformationen des Dienstes der Weiterleitungseinheit und die dementsprechend zugewiesene erste Ressource an ein Verwaltungsspeicherungsmodul der Verwaltungsschicht in einer asynchronen Nachrichtenweise zum Aufzeichnen und Speichern zu senden; und
wenn die erste Ressource nicht existiert, die Ressourcenanwendungsanforderung an das synchrone Speicherungsmodul der Weiterleitungseinheit zu senden.

12. System zur Zuweisung von Ressourcen nach Anspruch 7, worin das synchrone Zuweisungsmodul ferner dazu eingerichtet ist:
die Indexinformationen des Dienstes der Weiterleitungseinheit an die Verwaltungsschicht des Schalters in einer synchronen Nachrichtenweise zu senden, um bei der Verwaltungsschicht des Schalters Ressourcen zu beantragen und auf eine synchrone Antwortnachricht zu warten; und
wenn die synchrone Antwortnachricht der Verwaltungsschicht innerhalb einer Sende- und Empfangsperiode der synchronen Nachricht nicht empfangen wird, das synchrone Zuweisungsmodul dazu eingerichtet ist, nach der ersten Ressource aus den ersten, darin gespeicherten Ressourcenzuweisungsinformationen zu suchen, und die erste Ressource eigenständig dem Dienst für die Benutzung zuzuweisen.

## Revendications

1. Procédé d'allocation de ressources, comprenant :
la réception, par un module d'allocation synchrone d'une unité d'acheminement, d'une demande d'application de ressources pour un service de l'unité d'acheminement (s101), où la demande d'application de ressources porte des informations d'index du service de l'unité d'acheminement, l'unité d'acheminement est située dans une couche d'acheminement d'un commutateur, le module d'allocation synchrone stocke des premières informations d'allocation de ressources synchronisées périodiquement par un module de gestion et d'allocation sur une couche de gestion du commutateur, et les premières informations d'allocation de ressources comprennent des informations concernant les ressources allouées et les ressources non allouées ;
la recherche (s102), par le module d'allocation synchrone, à partir des premières informations d'allocation de ressources qui y sont stockées, d'une première ressource qui n'est pas utilisée et qui correspond aux informations d'index, selon les informations d'index et les informations d'allocation de ressources de l'unité d'acheminement ; et
l'allocation (s103), par le module d'allocation synchrone, de la première ressource de manière autonome au service à utiliser.

2. Procédé d'allocation de ressources selon la revendication 1, où, après l'étape d'allocation, par le module d'allocation synchrone, de la première ressource de manière autonome au service à utiliser, le procédé comprend en outre :
l'envoi, par le module d'allocation synchrone, des informations d'index du service et de la première ressource au module de gestion et d'allocation de manière asynchrone par message.

3. Procédé d'allocation de ressources selon la revendication 2, où après l'étape d'envoi, par le module d'allocation synchrone, des informations d'index du service et de la première ressource au module de gestion et d'allocation de manière asynchrone par message, le procédé comprend en outre :
la réception, par le module de gestion et d'allocation, du message asynchrone ;
lorsque la couche de gestion est inactive, la recherche, par le module de gestion et d'allocation, à partir des premières informations d'allocation de ressources qui y sont stockées, d'une seconde ressource qui n'est pas utilisée et qui correspond aux informations d'index, selon les informations d'index des informations de service et d'allocation de ressources de chaque unité d'acheminement, et l'envoi de la seconde ressource et des informations d'index du service au module d'allocation synchrone de manière asynchrone par message de réponse ; et
la réception et l'analyse, par le module d'allocation synchrone, du message de réponse asynchrone, et la libération de la première ressource selon un résultat d'analyse, et l'allocation de la seconde ressource au service à utiliser.

4. Procédé d'allocation de ressources selon la revendication 1, où, après l'étape d'allocation, par le module d'allocation synchrone, de la première ressource de manière autonome au service à utiliser, le procédé comprend en outre :
l'envoi, par le module d'allocation synchrone, de la première ressource et des informations d'index du service à un module de stockage synchrone de l'unité d'acheminement ; et
l'enregistrement et le stockage, par le module de stockage synchrone, de la première ressource et des informations d'index du service.

5. Procédé d'allocation de ressources selon la revendication 1, où un module de stockage synchrone de l'unité d'acheminement stocke des secondes informations d'allocation de ressources synchronisées périodiquement par un module de stockage de gestion de la couche de gestion du commutateur, où les secondes informations d'allocation de ressources comprennent des informations d'index d'un service existant de chaque unité d'acheminement et des ressources allouées de manière correspondante, et où avant l'étape de réception, par le module d'allocation synchrone de l'unité d'acheminement, d'une demande d'application de ressource, le procédé comprend en outre :
la réception, par le module de stockage synchrone, de la demande d'application de ressources ;
la détermination, par le module de stockage synchrone, si la première ressource existe dans les secondes informations d'allocation de ressources qui y sont stockées, selon les informations d'index ;
si la première ressource existe, le renvoi de la première ressource au service à utiliser, et l'envoi des informations d'index du service de l'unité d'acheminement et de la première ressource allouée de manière correspondante à un module de stockage de gestion de la couche de gestion de manière asynchrone par message pour l'enregistrement et le stockage ; et
si la première ressource n'existe pas, l'envoi de la demande d'application de ressources au module d'allocation synchrone de l'unité d'acheminement.

6. Procédé d'allocation de ressources selon la revendication 1, où, après l'étape de réception, par le module d'allocation synchrone, d'une demande d'application de ressources pour un service de l'unité d'acheminement, le procédé comprend en outre :
l'envoi, par le module d'allocation synchrone, des informations d'index du service de l'unité d'acheminement à la couche de gestion du commutateur de manière synchrone par message, de manière à appliquer des ressources à la couche de gestion du commutateur et à attendre un message de réponse synchrone, et
lorsque le module d'allocation synchrone ne reçoit pas le message de réponse synchrone de la couche de gestion à l'intérieur d'une période d'envoi et de réception du message synchrone, la réalisation, par le module d'allocation synchrone, d'une étape de recherche de la première ressource à partir des premières informations d'allocation de ressources qui y sont stockées.

7. Système d'allocation de ressources, comprenant une unité d'acheminement et une couche de gestion d'un commutateur, où l'unité d'acheminement comprend un module d'allocation synchrone et la couche de gestion du commutateur comprend un module de gestion et d'allocation, où
le module d'allocation synchrone, configuré pour recevoir une demande d'application de ressources pour un service de l'unité d'acheminement, où la demande d'application de ressources transporte des informations d'index du service de l'unité d'acheminement, et l'unité d'acheminement est située dans une couche d'acheminement du commutateur ;
le module de gestion et d'allocation, configuré pour synchroniser périodiquement des premières informations d'allocation de ressources avec le module d'allocation synchrone, les premières informations d'allocation de ressources comprennent des informations concernant des ressources allouées et des ressources non allouées ;
le module d'allocation synchrone, configuré pour stocker les premières informations d'allocation de ressources synchronisées périodiquement par le module de gestion et d'allocation, et
le module d'allocation synchrone est configuré pour rechercher, à partir des premières informations d'allocation de ressources qui y sont stockées, une première ressource qui n'est pas utilisée et qui correspond aux informations d'index, selon les informations d'index et les informations d'allocation de ressources de l'unité d'acheminement, et allouer automatiquement la première ressource au service à utiliser.

8. Système d'allocation de ressources selon la revendication 7, où le module d'allocation synchrone est en outre configuré pour envoyer les informations d'index du service et le message de la première ressource à la couche de gestion de manière asynchrone par message après l'allocation autonome de la première ressource au service à utiliser.

9. Système d'allocation de ressources selon la revendication 8, où le module de gestion et d'allocation est en outre configuré pour :
recevoir, après que le module d'allocation synchrone a envoyé les informations d'index du service et de la première ressource à la couche de gestion de manière asynchrone par message, le message asynchrone ;
lorsque la couche de gestion est inactive, rechercher, à partir des premières informations d'allocation de ressources qui y sont stockées, une seconde ressource qui n'est pas utilisée et qui correspond aux informations d'index, selon les informations d'index des informations du service et d'allocation de ressources de chaque unité d'acheminement, et envoyer la seconde ressource et les informations d'index du service au module d'allocation synchrone de manière asynchrone par message de réponse ; et
le module d'allocation synchrone est en outre configuré pour recevoir et analyser le message de réponse asynchrone, et libérer la première ressource selon un résultat d'analyse, et allouer la seconde ressource au service à utiliser.

10. Système pour allouer des ressources selon la revendication 7, où l'unité d'acheminement comprend en outre un module de stockage synchrone, où
le module d'allocation synchrone est en outre configuré pour envoyer la première ressource et les informations d'index du service au module de stockage synchrone après l'allocation autonome de la première ressource au service à utiliser, et
le module de stockage synchrone est configuré pour enregistrer et stocker la première ressource et les informations d'index du service.

11. Système pour allouer des ressources selon la revendication 7, où l'unité d'acheminement comprend en outre un module de stockage synchrone, et la couche de gestion du commutateur comprend en outre un module de stockage de gestion, où
le module de stockage de gestion est configuré pour synchroniser périodiquement des secondes informations d'allocation de ressources avec le module de stockage synchrone, les secondes informations d'allocation de ressources comprennent des informations d'index d'un service existant de chaque unité d'acheminement et des ressources allouées de manière correspondante ;
le module de stockage synchrone est configuré pour :
stocker les secondes informations d'allocation de ressources périodiquement synchronisées par le module de stockage de gestion ;
recevoir une demande d'application de ressources avant qu'un module d'allocation synchrone de l'unité d'acheminement ne reçoive la demande d'application de ressources ;
déterminer si la première ressource existe dans les secondes informations d'allocation de ressources qui y sont stockées, selon les informations d'index ;
si la première ressource existe, renvoyer la première ressource au service à utiliser, et envoyer les informations d'index du service de l'unité d'acheminement et la première ressource allouée de manière correspondante à un module de stockage de gestion de la couche de gestion de manière asynchrone par message pour l'enregistrement et le stockage ; et
si la première ressource n'existe pas, envoyer la demande d'application de ressources au module d'allocation synchrone de l'unité d'acheminement.

12. Système d'allocation de ressources selon la revendication 7, où le module d'allocation synchrone est en outre configuré pour :
envoyer les informations d'index du service de l'unité d'acheminement à la couche de gestion du commutateur de manière synchrone par message, de manière à demander des ressources à la couche de gestion du commutateur et à attendre un message de réponse synchrone ; et
lorsque le message de réponse synchrone de la couche de gestion n'est pas reçu à l'intérieur d'une période d'envoi et de réception du message synchrone, le module d'allocation synchrone est configuré pour rechercher la première ressource à partir des premières informations d'allocation de ressources qui y sont stockées, et allouer de manière autonome la première ressource au service à utiliser.
